Europäisches Patentamt

European Patent Office

Office européen des brevets

(11) Publication number: **0 034 591**
**B1**

# (12) EUROPEAN PATENT SPECIFICATION

(45) Date of publication of patent specification: **16.01.85**

(51) Int. Cl.⁴: **F 25 B 1/10, F 25 B 7/00**

(21) Application number: **80901475.6**

(22) Date of filing: **31.07.80**

(86) International application number:
**PCT/US80/00971**

(87) International publication number:
**WO 81/00446 19.02.81 Gazette 81/05**

(54) **APPARATUS FOR CONTROLLING CAPACITY OF A MULTIPLE-STAGE COOLING SYSTEM.**

(30) Priority: **31.07.79 US 62525**

(43) Date of publication of application:
**02.09.81 Bulletin 81/35**

(45) Publication of the grant of the patent:
**16.01.85 Bulletin 85/03**

(84) Designated Contracting States:
**AT CH DE FR GB LI LU NL SE**

(56) References cited:
**FR-A-2 165 138**
**GB-A-1 553 217**
**US-A-2 782 350**
**US-A-3 513 662**
**US-A-3 717 300**
**US-A-3 744 932**
**US-A-4 003 370**

(73) Proprietor: **ALSENZ, Richard H.**
**1545 Industrial Boulevard**
**Missouri City, TX 77459 (US)**

(72) Inventor: **ALSENZ, Richard H.**
**1545 Industrial Boulevard**
**Missouri City, TX 77459 (US)**

(74) Representative: **Warden, John Christopher et al**
**R.G.C. Jenkins & Co. 12-15, Fetter Lane**
**London EC4A 1PL (GB)**

This invention relates to an apparatus for increasing the performance of a multi-stage refrigeration or cooling system both in terms of matching load to demand as closely as possible in terms of economic use of all of the compressors.

In the past, the cycling of stages of a multiple-stage refrigeration or cooling system has been principally accomplished by setting each stage at a successively lower "cut-in" and "cut-out" pressure of the refrigeration fluid flowing in the suction line from the evaporator coil to the compressor(s) or cooling stages. The use of successively lower "cut-in" and "cut-out" pressure ranges for each cooling stage results in an average pressure which is lower than the mean pressure of the pressure differential between the "cut-in" and "cut-out" pressures of the highest stage. Various mechanical and electromechanical systems have been devices to attempt to solve this problem, primarily utilising the successively lower pressure ranges for each successive cooling stage as described above.

Patents which are typical of the prior art for mechanically or electromechanically controlling refrigeration compressor capacity include the following U.S. Patent Nos: 3,885,938; 3,828,152; 3,719,057; 3,581,519, 3,580,006; 3,552,137; 3,377,816 and 3,792,317.

It is known in particular from U.S. Patent 3,513,662 to provide in a control means for a cooling system a preselected number of commonly piped compressors having a common suction pressure load; measurement means for generating an increase capacity signal when said suction pressure exceeds a first preselected value and a decrease capacity signal when said suction pressure falls below a second predetermined value;

time delay means responsive to said measurement means for producing a time delay prior to generating a corresponding cut-in or cut-out signal; and

selection means for selecting at least one compressor to be energised or deenergised in response to a cut-in or cut-out signal so as to match system capacity to the cooling load.

In the system of this U.S. patent there is a feed-back control system in which both the fluid flow and the control scheme exhibit a cascaded or serially connected format. In other words the system operates on a LIFO (last-in first-out) strategy in which the ability of the control circuit to energise or deenergise a compressor is entirely dependent upon the status of the other in-line compressors in the system. For example in a three compressor system at any given time the combinations possible are No. 1, 1+2, and 1+2+3 i.e. a total of three combinations equal to the number of compressors. Such a system is subject to the disadvantages above described and also the disadvantage that the compressors are subjected to unequal wear, since the first compressor always takes the maximum load and the third compressor the least load. There is the further disadvantage that at least the first and possibly the second compressor will not be de-energised periodically as recommended by manufacturers. Although it is disclosed in US—A—3 513 662 to even out wear on the individual compressors by interchanging the order of energising the compressors, no specific means have been described for achieving this aim. According to a characterizing feature of the apparatus according to the invention, the selection means includes circuit means for tandemly energising a combination of said compressors from a number of possible combinations that exceeds the number of preselected compressors in the system.

The U.S. Patent 3717300 (Evalds). This describes a temperature control apparatus for heating hot water by means of electrical resistance elements which are protected in a closed loop and are energised and deenergised by means of a Wheatstone bridge balancing circuit containing a thermistor. The circuit is an integrated electronic circuit which relies upon closely matched resistors, a number of which are temperature dependent. It is inherently subject to malfunction through failure of a component and would be difficult to adapt to purposes other than its intended purpose. The circuit operates on a FIFO strategy (first-in, first-out). In its preferred arrangement, there is deliberate interruption of the circuit even when this is not needed to match demand, the purpose being to distribute the stress caused by long periods of use and to prevent the formation of "hot-spots". Use of such a system in a cooling system utilising a common circulation circuit would be counterproductive in promoting excessive and unnecessary compressor cycling. A modification of the circuit is described in which continuous interruption is not caused. It is said that this modification could be useful for long relay life but is discarded the ground that it would cause the same heating units to be energised for long periods of time thereby developing hot spots and failing to distribute the load. The patent does suggest that the load resistors may be considered as relays for activating cooling devices. There is no suggestion of utilising such a circuit in activating tendemly arranged compressors in a common cooling circuit or for utilising the modified and less preferred circuit arrangement in such a situation.

The present invention is based upon the realisation of the important advantages to be obtained by utilisation of the strategy defined in the first characteristic feature, e.g. a FIFO strategy, in a cooling system based upon tendemly connected compressors in a common cooling duct and that these advantages can be simply and reliably brought about through an improved control means based upon logic circuits which can ensure safe long term use and ease of maintenance, and which enable the cooling system to operate at close pressure settings giving higher performance and energy saving.

Thus the invention is further characterised in that the control circuit means comprises,

status monitoring means connected for receiving said delayed-increase capacity signals and delayed-decrease capacity signals from said time delay means and monitoring and storing compressor operational status, and

enabling means responsive to said status monitoring means and connected in tandem with said plurality of actuation means for generating a separate output voltage to at least one actuation means corresponding to a compressor of appropriate status in response to delayed-increase capacity signals received from said time delay means, and for discontinuing at least one of said output voltages corresponding to a compressor of appropriate status in response to delayed-decrease capacity signals.

Preferably the status monitoring means comprises a counter for receiving said delayed-increase and delayed-decrease capacity signals from said time delay means and generating in response thereto one of two corresponding successively repeatable series of cut-in and cut-out control signal outputs, the number of control signal outputs in each series at least equalling the number of cooling stages in the system, and wherein said enabling means comprises a latch circuit for receiving each of said cut-in control signal outputs as "set" signals generating in response thereto a selected one of a single successively repeatable series of cooling stage "on" signals for cutting-in a corresponding cooling stage, said latch circuit further receiving each of said cut-out control signal outputs as "reset" signals removing in response thereto a selected one of said "on" signals from said latch circuit series for cutting-out a corresponding cooling stage, said actuating means being responsive to said "on" signals, and means being provided if necessary for disabling the counter when all of the compressors are on or off.

In order that the manner in which the above-recited advantages and features of the invention are attained can be understood in detail, a more particular description of the invention may be had by reference to specific embodiments thereof which are illustrated in the appended drawings, which drawings form part of this specification. It is to be noted, however, that the appended drawings illustrate only typical embodiments of the invention and therefore are not to be considered limiting of its scope for the invention may admit to further equally affective embodiments.

In the drawings:

Figure 1 is a simplified schematic of a multiple-stage cooling or refrigeration system including the capacity control apparatus according to this invention.

Figure 2 is a block diagram schematic of the capacity controller circuit shown in Figure 1.

Figure 3 is a partial schematic representation of another embodiment of a pressure detection means for determining when a selected system "cut-in" and "cut-out" pressure has been reached.

Figure 4 is a graphical representation of the refrigerating fluid pressure vs. time of a multiple-stage refrigeration or cooling system load operating within the parameters of the capacity control method and apparatus according to the present invention.

Best mode for carrying out the invention

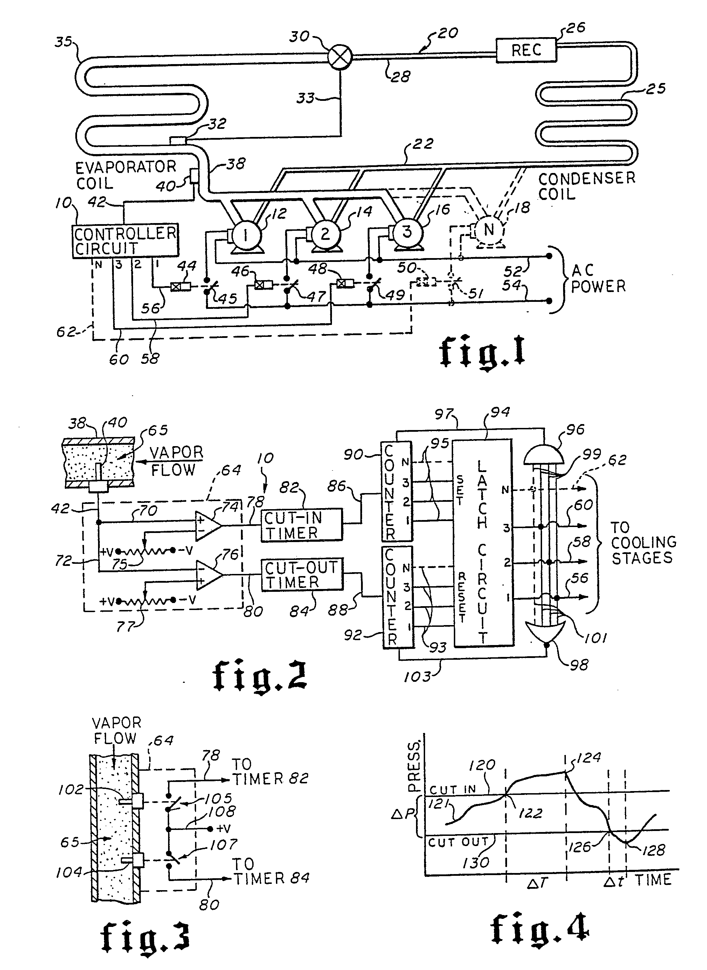

Referring now to Figure 1, the refrigeration system capacity controller circuit 10 is shown disposed in a multiple-stage refrigeration or cooling system 20 consisting of a plurality of parallel staged refrigerant compressors 12, 14, 16, and 18 for discharging compressed pressurized refrigerant vapor through discharge line 22 to a condenser coil 25 where the pressurized refrigerant vapor is condensed to a liquid and then delivered to a receiver vessel 26. From the receiver 26, the liquid refrigerant flows through line 28 and through an expansion device or valve 30, typically a mechanical expansion valve responding to the temperature in suction line 38 as sensed by temperature sensing device 32. The temperature signal from sensor 32 is applied to valve 30 through conductor 33 to initiate the expansion valve action. The liquid refrigerant is injected through expansion device 30 into the evaporator coil 35 where the liquid refrigerant, encountering the low pressure of the evaporator coil, boils and evaporates thus absorbing heat from the evaporator coil. The hot vaporized refrigerant from the evaporator coil is drawn through suction line 38 to the inlet ports of the multiple compressors 12—18. The number of parallel compressors to be staged in the system varies according to the refrigerating or cooling system load. In Figure 1, three compressors are shown in dotted lines as 12, 14 and 16 and an "N"th number of compressors is shown by compressor 18.

A pressure transducer 40 is attached to the suction line 38 and determines the refrigerant vapor pressure within suction line 38 and generates an electrical signal representative of the measured pressure. The signal is applied through conductor 42 as an input to the capacity controller circuit 10, which will be hereinafter described in greater detail. The output of the controller circuit 10 is a plurality of outputs corresponding to the number of the plurality of cooling stages or parallel compressors staged in the system. Accordingly, there are a corresponding "N" number of outputs from the capacity controller circuit 10 labelled 1, 2, 3 and N. The controller circuit output 1 is applied through conductor 56 to the coil of a relay 44 which controls relay switch contacts 45 for applying AC power via conductors 52 and 54 to the first compressor 12 for energizing the compressor when it is desired to cut the compressor into the system. Similarly, the 2, 3 and N outputs of the capacity controller circuit are applied through conductors 58, 60 and 62, respectively, to the coils of relays 46, 48 and 50, respectively, for successively closing switches 47, 49 and 51, respectively, for successively applying AC electrical power to the 2, 3, and N compressors, respectively, for either turning on or turning off the compressors in a staged sequence.

Referring now to Figures 1, 2 and 4, the operation of the capacity controller circuit 10 will be described in greater detail. The pressure detecting means or transducer 40 is shown sealingly inserted into the refrigerant vapor flow 65 in suction line tubing 38. Pressure transducer 40 may be any conventional pressure detecting means for generating an electrical signal representative of the pressure within line 38. The pressure signal from transducer 40 is applied through conductors 42 and 70 to the positive input of a comparator circuit 74, and through conductors 42 and 72 to the negative input of a second comparator circuit 76. To set a predetermined "cut-in" pressure for the system, a voltage potential is applied through a voltage varying means such as a potentiometer 75 to the negative input of the comparator circuit 74. Similarly, a voltage is applied through a voltage varying means such as potentiometer 77 to the positive input of the comparator circuit 76 to set a predetermined "cut-out" pressure for the system. Comparator circuit 74 compares the predetermined cooling system "cut-in" pressure (set by potentiometer 75) against the suction line pressure continuously detected by pressure transducer 40 and produces a "cut-in" electrical signal when the measured pressure exceeds the predetermined "cut-in" pressure. Comparator circuit 76 compares the predetermined cooling system "cut-out" pressure (set by potentiometer 77) against the pressure continuously detected by the pressure transducer 40 and produces a "cut-out" electrical signal when the detected system pressure exceeds the predetermined "cut-out" pressure. The combination of transducer 40, potentiometers 75 and 77 for establishing system pressure "cut-in" or "cut-out" pressure levels and the comparators 74 and 76 constitute detection means 64 for establishing a selected cooling stage "cut-in" or "cut-out" pressure and determining when those established pressures have been reached and providing an output signal in response thereto, i.e., output of comparators 74 or 76.

The "cut-in" signal of comparator 74 is applied through conductor 78 to a timer 82 which generates an output electrical control signal after a first predetermined minimum time delay. The delayed time output control signal is applied through conductor 86 as an input to a counter 90. Counter 90 is a conventional counter circuit that generates a successive plurality of outputs 1 to N corresponding to the number of staged parallel compressors in the system. Each delayed control signal received from timer 82 by counter 90 will cause a counter output signal to appear at one of the series of successive counter outputs 1, 2, 3 or N in repetitive succession, and are applied via a conductor 95 as a "set" input to a latch circuit 94.

The latch circuit 94 is of conventional solid-state design and generates a series of repeatable successive "cut-in" electrical control signals at outputs 1, 2, 3 and N, to be applied through conductors 56, 58, 60 and 62, respectively, to a series of repeatable successive compressor control relays 44, 46, 48 and 50, respectively, in response to successive "set" input signals received via conductors 95 from the 1, 2, 3 or N outputs of counter 90. For example, if the counter 90 has an output signal at output 1 applied through a conductor 95 as a "set" input to latch circuit 94, latch circuit 94 will generate a control signal output voltage at its 1 output (conductor 56). Similarly, output signals from counter 90 appearing in a series successively at 2, 3 and N are applied through conductors 94 as repeatable successive "set" inputs to latch circuit 94, thereby generating "cut-in" or turn on control signals appearing at outputs 2, 3 and N (conductors 58, 60 and 62, respectively). The electrical control signals are voltages applied through conductors 56, 58, 60 and 62, respectively to relays 44, 46, 48 and 50, respectively, as hereinabove described for successively energizing the relays 44, 46, 48 and 50, respectively, and successively energizing or turning on one of the multiple compressors 12, 14, 16 and 18, respectively.

Similarly, the "cut-out" output signal of comparator 76 is applied through conductor 80 to a timer 84. Timer circuit 84 generates a delayed "cut-out" electrical control signal after a predetermined time delay. The control signal is applied through conductor 88 as an input to another counter circuit 92. Counter 92 may be identical to the counter 90 hereinabove described. Each successive delayed "cut-out" control signal received from timer circuit 84 generates one of a series of repeatable successive electrical signals at counter 92 outputs 1, 2, 3 and N, which are applied through conductors 93 as "reset" inputs to latch circuit 94. Receipt of the successive series of delayed "cut-out" control signals from counter 92 causes the latch circuit 94 to be reset in the succession in which the counter signals are received.

For example, upon receipt of a counter 92 output 1 signal applied through conductor 93 as a "reset" input to latch circuit 94, the latch 94 output at 1 will be reset and no voltage will appear on conductor 56 thus de-energizing relay 44, opening relay switch contacts 45 and "cutting-out" the first compressor 12, which has run the longest. Accordingly, successive counter 92 signals received from outputs 2, 3 and N as "reset" inputs to latch circuit 94 will successively reset the latch circuit and remove the latch circuit voltage outputs appearing at lines 2, 3 and N (conductors 58, 60 and 62, respectively), for "cutting-out" compressors 14, 16 and 18 in succession.

In addition, the latch circuit outputs 1, 2, 3 and N (conductors 56, 58, 60 and 62, respectively) are also connected by conductors 99 as inputs to a conventional AND gate 96. When all of the latch circuit outputs 1, 2, 3 and N have positive output voltages appearing thereon, the AND gate 96 generates an output signal applied through conductor 97 to counter 90 to disable counter 90 at its last count and prevent further delayed "cut-in" electrical signals received from timer 82 from generating further counter 90 output electrical signals for application to the latch circuit 94. Similarly, the latch circuit outputs 1, 2, 3, and N are also connected by means of conductors 101 as inputs to a conventional NOR gate 98. NOR gate 98 will generate an electrical output signal to be applied through conductor 103 to disable counter 92 when all of the latch circuit outputs 1, 2, 3 and N have been reset and there are no output voltage signals present thereon. The electrical signal received from NOR gate 98 disables counter 92 and prevents any further "cut-out" delayed signals received from timer 84 from triggering any further counter 92 output signals to be applied as reset inputs to latch circuit 94.

The operation of the capacity controlling circuit 10 can now further be described with reference to Figures 1, 2 and 4. The graph of Figure 4 depicts the system refrigerating fluid vs. time and is represented by pressure trace 121. The selected "cut-in" pressure represented by line 120 is set for the system by potentiometer 75 as one input to the comparator 74, as hereinabove described. The selected "cut-out" pressure represented by line 130 is set by potentiometer 77 as one input to comparator 76, as hereinabove described. The desired system suction line pressure range $\Delta P$ has been selected for optimum efficiency of the system. The timer 82, as hereinabove described, establishes a predetermined delay time which is represented by the time interval $\Delta T$, and the delay time established by timer circuit 84 is represented by the shorter time interval $\Delta t$. Assuming that compressors 1 and 2 are operating in the system within the $\Delta P$ established by "cut-in" pressure (120) and the "cut-out" pressure (130), if the refrigerator load increases, then the suction line pressure will rise. If the load is heavy enough, the pressure (121) will rise until it exceeds the predetermined value established by potentiometer 75 (line 120) at point 122 and comparator 74 will generate an electrical "cut-in" signal to be applied to the timer 82.

The comparator signal output occurs at point 122 which is the point at which the suction line pressure 121 rises above or exceeds the predetermined cut-in system pressure and establishes the beginning of the delay time $\Delta T$ of timer 82. The suction pressure may continue to rise as shown in Figure 4 until timer 82 generates its delayed "cut-in" electrical control signal which is applied to counter 90, and since compressors 1 and 2 are already operating, counter 90 will generate an output signal at output 3 which is then applied through a conductor 95 as a "set" input to latch circuit 94. Receipt of the delayed "cut-in" signal from output 3 of timer 82 by the latch circuit 94 causes a positive voltage to appear at latch output 3 (conductor 60) which is applied to relay 48 for energizing the relay, closings relay switch 49 and "cutting-in" the third compressor 16, which has been "turned off" the longest time period. The end of the predetermined time delay, $\Delta T$, established by timer 82, occurs at point 124, and the third compressor or cooling stage now in the system adds cooling capacity and returns the pressure to the desired operating pressure line pressure to the desired operating pressure differential $\Delta P$ range established by pressures 120 and 130.

In the event the suction pressure (121) declines because of over-capacity in the system, and falls below the predetermined "cut-out" pressure represented by line 130, then comparator 76 will generate a "cut-out" signal applied to the timer 84 occuring at point 126, which begins the established time delay $\Delta t$. When the predetermined time delay $\Delta t$ has elapsed, timer 84 generates a "cut-out" electrical control signal applied through conductor 88 as an input to the counter 92. The counter 92, in response to the received signal, will generate an output signal on line I applied through a conductor 93 to latch circuit 94 as a "reset" input. The counter reset signal applied to latch circuit 94 will "reset" output line I of the latch circuit, thereby removing the positive voltage output at conductor 56 and de-energizing relay 44, opening switch contacts 45 and "cutting-out" compressor 12 (which has been operating the longest time period) from the system, as reflected at 128, the end of the delay $\Delta t$ and the point where the suction pressure again begins to increase. When compressor 12 is "cut-out" of the system, the suction line pressure begins to increase until it returns to the desired operating range between the pressure differentials 120 and 130.

In this way the multiple staged compressors can be "cut-in" or "cut-out" of the system to increase or decrease refrigeration capacity depending on the system refrigeration load. The compressor that has operated the longest will always be the first to be "cut-out" when the system capacity needs diminish, and the compressor that has not operated the longest will be the next to be "cut-in" when the system capacity needs increase.

The timers 82 and 84 and counters 90 and 92 "remember" the length of their respective time delays, $\Delta T$ and $\Delta t$. For example, referring to Figures 1, 2 and 4, if $\Delta T$ is five (5) minutes, and $\Delta t$ is five (5) seconds, if suction pressure 121 rises above the "cut-in" pressure (120) at point 122, the five (5) minute $\Delta T$ period begins. However, if suction pressure trace 121 had dropped back below "cut-in" pressure 120 after only two (2) minutes had elapsed (or before reaching point 124), the "cut-in" signal from comparator 74 will cease, disabling timer 82. Similarly, if suction pressure trace 121 falls below the "cut-out" pressure 130 as at point 126, the five (5) second $\Delta t$ period begins. However, if the suction pressure (121) increases and rises above "cut-out" pressure (130) after only three (3) seconds, the "cut-out" signal from comparator 76 will cease and disable timer 84, and no delayed "cut-out" signal will be sent to counter 92. Accordingly, no delayed "cut-in" signal will be addressed to counter 90. Therefore, no additional compressor or cooling stage will be "cut-in", but the next time the suction pressure 121 exceeds the "cut-in" pressure, timer 82 will again be energized and will produce a delayed "cut-in" signal after only three (3) minutes (the balance of $\Delta T$ left over from the last $\Delta T$ period) and "cut-in" or turn on the next compressor or cooling stage of the system. Similarly, the next time the pressure trace 121 decreases to fall below the "cut-out" pressure, timer 84 will again be enabled and will produce a delayed "cut-out" signal after only two (2) seconds (the balance of $\Delta t$ left over from the last $\Delta t$ period) and "cut-out" or turn off the compressor which has run the longest.

The refrigeration capacity control circuit herein disclosed may also be utilized in controlling multiple-stage refrigeration or cooling systems having multi-cylinder compressors that are staged by controlling the compression of a plurality of compressor cylinders using conventional control valves by having controller 10 outputs control the utilization of the cooling stages by controlling the cylinders used by the compressors in the system. In addition, it is important to understand that while the system above described in Figures 1, 2 and 4 uses a separate time delay after determination of the reaching of the established "cut-in" or "cut-out" pressures, only a single time delay is necessary to enable selection of successive cooling stages utilizing a single selected "cut-in" system pressure and a single selected "cut-out" system pressure. For instance, in Figure 2, the output of "cut-out" comparator 76 could be applied to timer 82 and utilize a single delay time for both "cut-in" and "cut-out" deter-

minations. Further, the $\Delta P$ differential between "cut-in" pressure 120 (Figure 4) and "cut-out" pressure 130 may be large or small, depending on the system design and the best system operating pressure. In certain systems, the $\Delta P$ could be set at zero, with the "cut-in" and "cut-out" pressures being established at the same value.

Another embodiment of the detecting means 64 is shown in Figure 3. A pair of pressure switches 102, 104 are sealingly disposed in line 38 in contact with the pressurized refrigerating fluid vapor 65 flowing therein. The pressure switches 102 and 104 may be preset to operate at preset selected established "cut-in" and "cut-out" pressures, respectively, detected in line 38. When pressure switch 102 detects pressure exceeding the established "cut-in" pressure, it is actuated and operates switch contacts 105 to apply a voltage signal via conductors 108 and 78 to timer 82 for the purposes hereinabove described. Similarly, when pressure switch 104 detects pressure below the established "cut-out" pressure, it is actuated and operates switch contacts 107 to apply a voltage signal via conductors 108 and 80 to timer 84 for the purposes hereinabove described. Accordingly, the means of establishment of the single selected system "cut-in" and "cut-out" pressures and the determination of reaching those pressures can be combined, thus eliminating the need for the comparator circuits 74 and 76 and the potentiometers 75 and 77.

While the above description of the preferred embodiments has been made with particular reference to a multiple-stage refrigeration system using parallel staged compressors or staged multiple-cylinder compresssors, it should be appreciated that the capacity controlling method and apparatus herein described may be utilized in controlling the capacity of any multiple-stage cooling system such as air-conditioning systems utilizing chilled water and the like, by controlling cooling stages in those systems by controlling utilization of water circulating pumps or controlling the utilization of vanes in centrifugal pumps and the like.

**Claims**

1. Apparatus for matching the capacity of a cooling system to the cooling load, comprising

a preselected number of commonly piped compressors (12—16) controllably energised and deenergised by a plurality of actuation means (45—51) and having a common suction pressure load (35);

measurement means (40) for generating an increase capacity signal when said suction pressure exceeds a first preselected value and a decrease capacity signal when said suction pressure falls below a second predetermined value;

selection means (10) for selecting at least one compressor to be energised or deenergised in response to said increase capacity signal or a decrease capacity signal so as to match capacity to the cooling load, including time delay means (82, 84) receiving periodic increase capacity signals and decrease capacity signals from said measurement means and producing a respective delayed-increase capacity signal or a delayed-decrease capacity signal,

characterised in that the selection means (10) includes control circuit means for tandemly energising a combination of said compressors from a number of possible combinations that exceeds the number of preselected compressors in the system, the control circuit comprising,

status monitoring means (90, 92) connected for receiving said delayed-increase capacity signals and delayed-decrease capacity signals from said time delay means and monitoring and storing compressor operational status, and

enabling means (94) responsive to said status monitoring means and connected in tandem with said plurality of actuation means for generating a separate output voltage to at least one actuation means corresponding to a compressor of appropriate status in response to delayed-increase capacity signals received from said time delay means, and for discontinuing at least one of said output voltages corresponding to a compressor of appropriate status in response to delayed-decrease capacity signals.

2. Apparatus according to claim 1 wherein said status monitoring means comprises a counter (90, 92) for receiving said delayed-increase and delayed-decrease capacity signals from said time delay means and generating in response thereto one of two corresponding successively repeatable series of cut-in and cut-out control signal outputs, the number of control signal outputs in each series at least equalling the number of cooling stages in the system, and wherein said enabling means comprises a latch circuit (94) for receiving each of said cut-in control signal outputs as "set" signals generating in response thereto a selected one of a single successively repeatable series of cooling stage "on" signals for cutting-in a corresponding cooling stage, said latch circuit further receiving each of said cut-out control signal outputs as "reset" signals removing in response thereto a selected one of said "on" signals from said latch circuit series for cutting-out a corresponding cooling stage, said actuating means (44—50) being responsive to said "on" signals, and means (96, 98) being provided if necessary for disabling the counter when all of the compressors are on or off.

3. Apparatus according to claim 1 or claim 2 wherein the time delay means is arranged to accumulate successive time delay periods which expire prior to the generation of a delayed-increase or delayed-decrease capacity signal.

4. Apparatus according to any preceding claim wherein said measurement means comprises

pressure selecting means (75, 77) for establishing an operating suction pressure range having an upper limit and a lower limit, and

detection means (40) for sensing the common suction pressure and cooperating with said pressure selecting means for determining when said pressure exceeds said upper limit and providing an increase capacity signal in response thereto and when said pressure is below said lower limit and providing a decrease capacity signal in response thereto.

**Revendications**

1. Appareil destiné à adapter la capacité d'un système de refroidissement à la charge de refroidissement, comprenant

un nombre présélectionné de compresseurs (12—16) branchés à des conduits communs, mis en fonction et hors fonction de manière commandée par un ensemble de moyens d'actionnement (45—51) et ayant une charge de pression d'aspiration commune (35);

des moyens de mesure (40) destinés à produire un signal d'augmentation de capacité lorsque la pression d'aspiration dépasse une première valeur présélectionnée, et un signal de diminution de capacité lorsque la pression d'aspiration tombe au-dessous d'une seconde valeur prédéterminée;

des moyens de sélection (10) destinés à sélectionner au moins un compresseur sous l'effet d'un signal d'augmentation de capacité ou d'un signal de diminution de capacité, afin d'adapter la capacité à la charge de refroidissement, comprenant des moyens de retard (82, 84) qui reçoivent des signaux périodiques d'augmentation de capacité et de diminution de capacité provenant des moyens de mesure et qui produisent respectivement un signal d'augmentation de capacité retardé ou un signal de diminution de capacité retardé,

caractérisé en ce que les moyens de sélection (10) comprennent un circuit de commande destiné à mettre en fonction en tandem une combinaison des compresseurs, parmi un certain nombre de combinaisons possibles, en nombre supérieur au nombre de compresseurs présélectionnés dans le système, le circuit de commande comprenant,

des moyens de contrôle d'état (90, 92) connectés de façon à recevoir les signaux d'augmentation de capacité retardés et les signaux de diminution de capacité retardés provenant des moyens de retard, et à contrôler et à mémoriser l'état fonctionnel des compresseurs, et

des moyens de validation (94) fonctionnant sous la dépendance des moyens de contrôle d'état et connectés en tandem avec l'ensemble de moyens d'actionnement, pour appliquer une tension de sortie séparée à au moins un moyen d'actionnement correspondant à un compresseur d'état approprié, sous l'effet de signaux d'augmentation de capacité retardés reçus à partir des moyens de retard, et pour faire disparaître l'une au moins des tensions de sortie correspondant à un compresseur d'état approprié, sous l'effet de signaux de diminution de capacité retardés.

2. Appareil selon la revendication 1, dans lequel les moyens de contrôle d'état comprennent un compteur (90, 92) destiné à recevoir les signaux d'augmentation de capacité retardés et les signaux de diminution de capacité retardés provenant des moyens de retard, et à produire sous l'effet de ces signaux l'une de deux séries correspondantes de signaux de sortie de commande de mise en fonction et de mise hors fonction se répétant successivement, le nombre de signaux de sortie de commande· dans chaque série étant au moins égal au nombre d'étages de refroidissement dans le système, et dans lequel les moyens de validation comprennent un circuit de bascules (94) destiné à recevoir chacun des signaux de sortie de commande de mise en fonction en tant que signaux de "positionnement" et produisant en réponse à ces signaux un signal sélectionné parmi une seule série de signaux de fonctionnement d'étage de refroidissement, se répétant successivement, pour mettre en fonction un étage de refroidissement correspondant, ce circuit de bascules recevant en outre chacun des signaux de sortie de commande de mise hors fonction en tant que signaux de "restauration", et faisant disparaître, sous l'effet de ces signaux, l'un sélectionné des signaux de fonctionnement dans la série du circuit de bascules, pour mettre hors fonction un étage de refroidissement correspondant, les moyens d'actionnement (44—50) réagissant aux signaux de fonctionnement, et des moyens (96, 98) étant prévus, si nécessaire, pour invalider le compteur lorsque tous les compresseurs sont en fonctionnement ou à l'arrêt.

3. Appareil selon la revendication 1 ou la revendication 2, dans lequel les moyens de retard sont conçus de façon à accumuler des durées de retard successives qui se terminent avant la génération d'un signal d'augmentation de capacité retardé ou d'un signal de diminution de capacité retardé.

4. Appareil selon l'une quelconque des revendications précédentes, dans lequel les moyens de mesure comprennent

des moyens de sélection de pression (75, 77) destinés à établir une plage de pression d'aspiration de fonctionnement ayant une limite supérieure et une limite inférieure, et

des moyens de détection (40) destinés à détecter la pression d'aspiration commune et à coopérer avec les moyens de sélection de pression pour déterminer le moment auquel la pression dépasse la limite supérieure, en produisant en réponse un signal d'augmentation de capacité, et le moment auquel la pression est inférieure à la limite inférieure, en produisant en réponse un signal de diminution de capacité.

**Patentansprüche**

1. Vorrichtung zur Anpassung der Kapazität einer Kühlanlage an die erforderliche Kühlleistung mit einer vorgewählten Anzahl über Rohrleitungen in Verbindung stehender Kompressoren (12 bis 16), die durch eine Vielzahl von Schaltelementen (45 bis 51) regelbar eingeschaltet und ausgeschaltet werden können und mit einer gemeinsamen Saugdruckbelastung (35) beaufschlagt werden, einem Meßelement (40) zur Erzeugung eines Signal zur Kapazitätserhöhung, falls der Saugdruck einen ersten vorbestimmten Wert übersteigt, und eines Signals zur Kapazitätserniedrigung, falls der Saugdruck unter einen zweiten vorbestimmten Wert abfällt, und einem Auswahlelement (10) zur Auswahl zumindest eines als Reaktion auf das Signal zur Kapazitätserhöhung oder ein Signal zur Kapazitätserniedrigung einzuschaltenden bzw. auszuschaltenden Kompressors, um so die Kapazität der erforderlichen Kühlleistung anzupassen, wobei das Auswahlelement (10) Zeitverzögerungselemente (82, 84) umfaßt, die von dem Meßelement periodische Signale zur Kapazitätserhöhung und periodische Signale zur Kapazitätserniedrigung erhalten und ein entsprechendes Signal zur verzögerten Kapazitätserhöhung bzw. ein Signal zur verzögerten Kapazitätserniedrigung erzeugen, dadurch gekennzeichnet, daß das Auswahlelement (10) ein Steuerkreiselement enthält, das dazu dient, gemeinsam eine Zusammenstellung der Kompressoren aus einer Anzahl von möglichen Zusammenstellungen einzuschalten, die die Anzahl der vorgewählten Kompressoren in der Anlage übersteigt, wobei das Steuerkreiselement Zustandsüberwachungselemente (90, 92) umfaßt, die derart geschaltet sind, das sie die Signale zur verzögerten Kapazitätserhöhung und die Signale zur verzögerten Kapazitätserniedrigung von den Zeitverzögerungselementen erhalten und den Betriebszustand des, Kompressors überwachen und speichern, sowie ein Sperrelement (94), das auf die Zustandsüberwachungselement reagiert und gemein-

sam mit der Vielzahl der Schaltelemente geschaltet ist, um eine getrennte Ausgangsspannung zumindest an ein Schaltelement anzulegen, das einem Kompressor zugeordnet ist, der entsprechend den von den Zeitverzögerungselementen erhaltenen Signalen zur verzögerten Kapazitätserhöhung in einem bestimmten Zustand ist, und zur Unterbrechung zumindest einer der Ausgangsspannungen, die einem Kompressor zugeordnet ist, der entsprechend den Signalen zur zeitverzögerten Kapazitätserniedrigung in einem bestimmten Zustand ist.

2. Vorrichtung nach Anspruch 1, bei der die Zustandsüberwachungselemente einen Zähler (90, 92) beinhalten, der dazu dient, von den Zeitverzögerungselementen die Signale zur verzögerten Kapazitätserhöhung bzw. zur verzögerten Kapazitätserniedrigung aufzunehmen und als Reaktion darauf ein oder zwei entsprechende nacheinander wiederholbare Reihen von Einschalt- und Ausschaltsteuerausgangssignalen zu erzeugen, wobei die Anzahl der Steuerausgangssignale in jeder Reihe zumindest der Anzahl der Kühlstufen in der Anlage entspricht, und bei der das Sperrelement einen Sperrkreis (94) umfaßt, der dazu dient, jedes der Einschaltsteuerausgangssignale als Einschaltsignal aufzunehmen und als Reaktion darauf ein aus einer einzelnen aufeinanderfolgend wiederholbaren Reihe von Kühlstufeneinschaltsignalen ausgewähltes Signal zu erzeugen, so daß eine entsprechende Kühlstufe eingeschaltet wird, wobei dieser Sperrkreis außerdem jedes der Ausschaltsteuerausgangssignale als Löschsignal aufnimmt, und als Reaktion darauf ein aus der von dem Sperrkreis ausgehenden Rehie von Einschaltsignalen ausgewähltes Signal beseitigt, um eine entsprechende Kühlstufe auszuschalten, wobei sich die Einschaltsignale aus den Schaltelementen (44 bis 50) ergeben und, falls notwendig, Elemente (96, 98) vorgesehen sind, die dazu dienen, den Zähler auszuschalten, falls alle Kompressoren eingeschaltet bzw. ausgeschaltet sind.

3. Vorrichtung nach Anspruch 1 oder 2, bei der das Zeitverzögerungselement derart geschaltet ist, daß es aufeinanderfolgende Zeitverzögerungsperioden akkumuliert, die vor der Erzeugung eines Signals zur verzögerten Kapazitätserhöhung oder zur verzögerten Kapazitätserniedrigung zu Ende gehen.

4. Vorrichtung nach einem der vorangehenden Ansprüche, bei dem das Meßelement Druckauswahlelemente (75, 77) umfaßt, die dazu dienen, einen Betriebssaugdruckbereich mit einer oberen und einer unteren Begrenzung festzusetzen, sowie ein Fühlelement (40), das dazu dient, den gemeinsamen Saugdruck zu erfassen und im Zusammenwirken mit den Druckauswahlelementen zu bestimmen, falls der Druck die obere Begrenzung übersteigt, und das als Reaktion darauf ein Signal zur Kapazitätserhöhung erzeugt, und, falls der Druck die untere Begrenzung untersteigt, als Signal derauf ein Signal zur Kapazitätserniedrigung erzeugt.

fig.1

fig.2

fig.3

fig.4